# EUROPEAN PATENT APPLICATION

(11) **EP 4 248 823 A1**
(43) Date of publication of application: **27.09.2023**
(21) Application number: 20964279.2
(22) Date of filing: 03.12.2020
(51) Int. Cl.: A47L 9/02, A47L 9/24, B08B 5/00, E01H 1/08

(54) **VACUUM-SEPARATING COMPOUND TUBE, AND VACUUM CLEANING MACHINE AND COLLECTING MACHINE UTILIZING SAME**

(71) Applicant: Yamabiko Corporation, Ohme-shi Tokyo 198-8760 (JP)
(72) Inventor: TAKAI, Seita, Tokyo 198-8760 (JP); TAKAHASHI, Ukyo, Tokyo 198-8760 (JP); FUJINAMI, Shunsuke, Tokyo 198-8760 (JP)
(74) Representative: Schrell, Andreas
(86) International application number: PCT/JP2020/045023
(87) International publication number: WO 2022/118426

(57) **Abstract**

Provided is a suction and separation composite tube, and a suction cleaning machine and a harvesting machine using the same, which are highly cost effective and are capable of, with a relatively simple structure to keep the manufacturing costs low, separating items of relatively small specific gravity from items of relatively large specific gravity even if the output of a motor is set high, and thus reducing the likelihood of clogging or the like of sucked objects and effectively preventing damage to or breakage of a fan and a fan casing. The suction and separation composite tube includes a connecting tube portion 12, a suction tube portion 14, and a separation tube portion 13. The suction tube portion 14 or the separation tube portion 13 is integrally continuous with the connecting tube portion 12 at a distal end thereof. The suction tube portion 14 and the separation tube portion 13 are combined together at an intermediate portion or proximal end portion thereof. Using the fact that the flow velocity of airflow involving sucked objects that have been sucked from a suction port 14a decreases at a combining portion 15, the sucked objects are separated into items of relatively small specific gravity and items of relatively large specific gravity.

## Description

### Technical Field

The present invention relates to a composite tube that is suitable for use in cleaning work or the like to suck, for example, fallen leaves, cut grass, dust on the ground and the like and collect them into a dust bag or the like. More particularly, the present invention relates to a suction and separation composite tube, and a suction cleaning machine and a harvesting machine using the same, configured to be able to easily separate sucked objects into items that are relatively light and soft with a large surface area (small specific gravity) such as fallen leaves and items that are relatively heavy and hard (large specific gravity) such as stones.

### Background Art

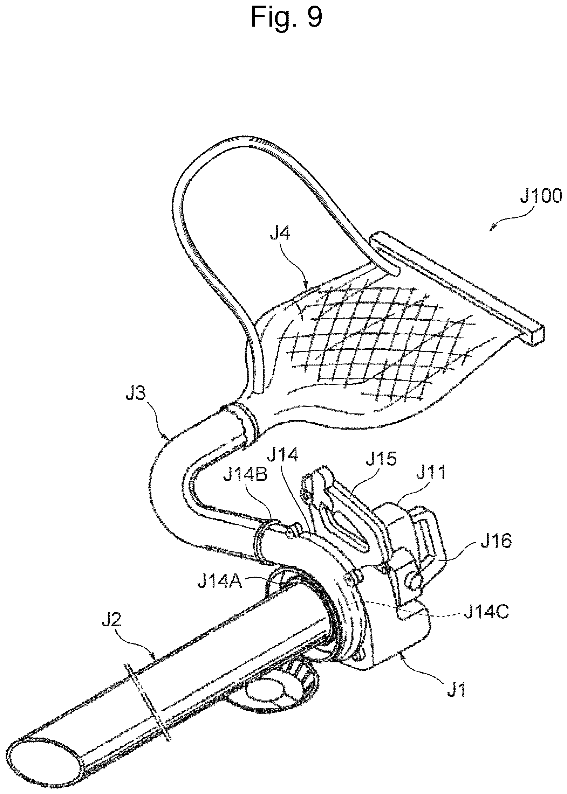

There is known a portable air blower for dust collecting and cleaning work on roads or the like using a suction pressure or air-blowing pressure of the power-driven air blower. Fig. 9 is a view illustrating an example of a conventional portable air blower that is used as a suction device (also referred to as a vacuum cleaner or a suction cleaning machine).

In a portable air blower J100 of this conventional example, a main body J1 is integrally formed with a motor J11 for driving a fan, a recoil starter for starting, a fuel tank, a fan casing J14 for housing the fan, and the like, and a suction pipe J2 is detachably coupled to an intake opening J14A of the fan casing J14, while a blowoff pipe J3 is detachably coupled to an outlet opening J14B of the fan casing J14. A dust bag J4 having appropriate air permeability is attached to an outlet end (downstream end) of the blowoff pipe J3. Further, handles J15, J16 that an operator grasps are provided on the main body J1. In the intake opening J14A of the fan casing J14, a cutter that is mounted on a drive shaft of the fan and rotates together with the fan is provided.

According to this portable air blower J100, the fan is driven by starting the motor J11, and with a suction pressure generated by the air blowing of the fan, objects such as fallen leaves, wood chips, dust, and the like are sucked into the intake opening J14A of the fan casing J14 through the suction pipe J2. Then, the sucked objects are smashed by the cutter rotating together with the fan, and the smashed sucked objects are sent to the outlet opening J14B through an intake passage (also referred to as a volute) J14C in the fan casing J14, and collected in the dust bag J4 via the blowoff pipe J3.

Examples of such a portable air blower J100 include the one designed specially as a suction device using the suction pressure as illustrated, the one designed specially as an air-blowing device using the air-blowing pressure with a blowoff nozzle attached to an outlet opening, or the one designed as a combined device that can employ both the mode of using the suction pressure, where the suction pipe, the blowoff pipe, and the blowoff nozzle are detachable as illustrated, and the mode of using the air-blowing pressure, where the suction pipe is detached and a safety cover is attached to the intake opening, and the blowoff nozzle is attached to the outlet opening (see Patent Literature 1).

In addition, when the above-stated portable air blower J100 is used as a suction device to collect, for example, fallen leaves or the like on roads, normally, the proximal end portion of the suction pipe J2, which is a cylindrical pipe made of a synthetic resin such as vinyl chloride, is inserted into the intake opening J14A, and is detachably mounted by a fastening band or the like put around the outer circumferential side of the intake opening J14A, for example.

### Citation List

### Patent Literature

Patent Literature 1: JP 2000-179497 A
Patent Literature 2: JP 2009-091914 A
Patent Literature 3: JP 2017-014850 A

### Summary of Invention

### Technical Problem

By the way, essentially, the above-stated portable air blower (is able to be switched into suction cleaning machine) is aimed mainly to suck in relatively light and soft items such as fallen leaves and cut grass and collect them into a dust bag using the rotation of the fan. In practice, however, the above-stated portable air blower (suction cleaning machine) may suck in relatively heavy and hard items such as stones and tree branches, causing damage to or breakage of the fan and the fan casing.

One of the conventional ways proposed to prevent such damage to or breakage of the fan and the fan casing is reducing the output of the motor so as not to suck up heavy and hard items, increasing the diameter of the suction pipe so as not to suck up heavy items to the fan (see Patent Literature 2), reducing the number of blades of the fan, providing a protection member upstream of the fan and the like so as to prevent hard items from directly colliding with the fan, and producing the fan and the fan casing using a high impact material or the like.

However, reducing the output of the motor, increasing the diameter of the suction pipe, or reducing the number of blades of the fan may cause the corresponding suction force to decrease. In particular, when using the suction cleaning machine as a blower for air-blowing work that blows closer the fallen leaves and dust and the like as described above, reducing the output of the motor in accordance with the suction work or reducing the number of blades of the fan may cause the air-blowing performance to decrease. In addition, providing a protection member upstream of the fan or producing the fan and the like using a high impact material may inevitably cause the manufacturing costs to increase. In particular, when producing the fan and the like using a high impact material, the weight of the fan and the like may also increase, and thus such a conventional way is not practical for the portable air blower (suction cleaning machine) that is required to reduce its weight for improving operability.

In addition, as described in Patent Literature 3, for example, another one of the conventional ways proposed to prevent damage to or breakage of the fan and the fan casing is separating sucked objects, before taken into the fan casing, into items that are relatively light and soft with a large surface area (small specific gravity) such as fallen leaves and items that are relatively heavy and hard (large specific gravity) such as stones using the centrifugal separation effect, and taking only the items of small specific gravity into the fan casing.

However, the proposed technique of Patent Literature 3 requires a centrifugal separation portion with a double-pipe structure and an L-shaped suction tube portion and also requires introducing the sucked objects at a considerably high speed from the direction approximately perpendicular to the centrifugal separation portion via the suction tube portion and making the sucked objects spin around the central shaft of the centrifugal separation portion. As a result, the structure of the suction pipe tends to be complicated and the manufacturing costs tend to be higher, and various problems may occur such that the sucked objects such as tree branches, long grass, strings and the like are easily caught, entangled, and clogged in the suction tube portion and the centrifugal separation portion.

The present invention has been made in view of the foregoing, and it is an object of the present invention to provide a suction and separation composite tube, and a suction cleaning machine and a harvesting machine using the same, which are highly cost effective and are capable of, with a relatively simple structure to keep the manufacturing costs low, separating sucked objects, before taken into the fan casing, into items of relatively small specific gravity such as fallen leaves and items of relatively large specific gravity such as stones even if the output of the motor is set high, and thus reducing the likelihood of clogging or the like of the sucked objects and effectively preventing damage to or breakage of the fan and the fan casing.

### Solution to Problem

The present inventors and others have conducted intensive studies in an attempt to achieve the above-stated object, and obtained the following findings.

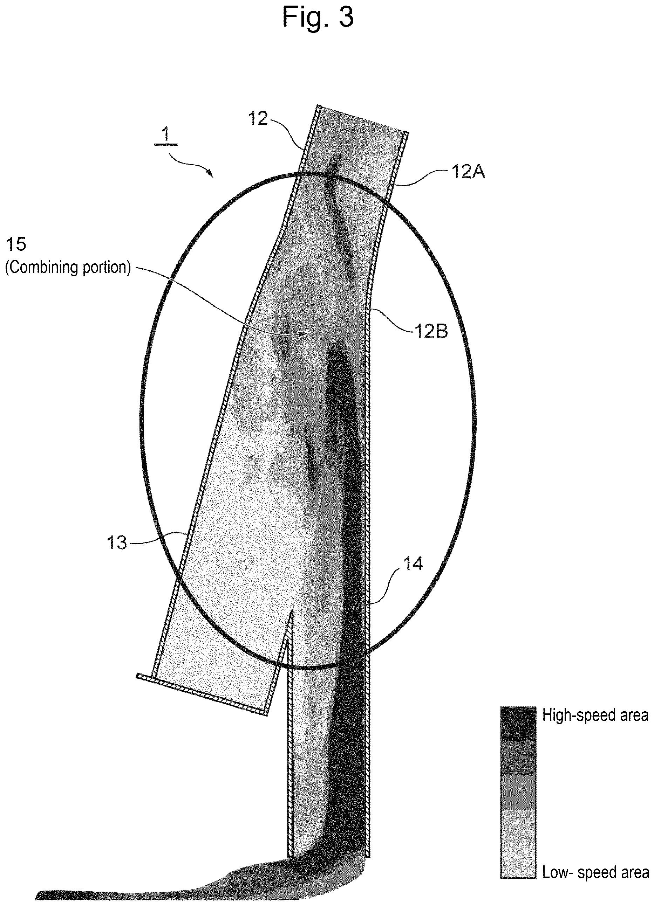

That is, the present inventors and others repeated experiments with a prototype of a suction and separation composite tube in which a suction tube portion is combined with a separation tube portion, and studied and considered changes in the airflow inside of the composite tube during operation through visualization by a computer simulation (see Fig. 3). The present inventors and others have found that, by using the fact that the flow velocity of the airflow involving the sucked objects that have been sucked from the suction port of the suction tube portion decreases at the combining portion (circled portion in Fig. 3) between the separation tube portion and the suction tube portion, the sucked objects can be separated into items of relatively small specific gravity and items of relatively large specific gravity.

The suction and separation composite tube according to the present invention has been made on the ground of the above findings and the considerations based on the findings, and basically includes a connecting tube portion disposed adjacent to a power-driven air blower, a suction tube portion including at an open distal end a suction port that is communicated with outside air to suck objects therefrom, and a separation tube portion that is adapted to block off the outside air as compared with the suction tube portion. The suction tube portion or the separation tube portion is provided to be integrally continuous with the connecting tube portion at a distal end thereof, and the suction tube portion and the separation tube portion are combined together at an intermediate portion or proximal end portion thereof, and a flow velocity of airflow involving objects that have been sucked from the suction port decreases at a combining portion between the suction tube portion and the separation tube portion.

In one aspect, an effective passage cross-sectional area of the separation tube portion is larger than an effective passage cross-sectional area of the suction tube portion.

In another aspect, a passage cross-sectional area on a plane which runs through a predetermined position of a combining portion from a combining start portion to a combining end portion between the suction tube portion and the separation tube portion and is perpendicular to the suction tube portion is larger than an effective passage cross-sectional area of the suction tube portion or the separation tube portion.

In another aspect, the connecting tube portion is disposed above a combining start portion between the suction tube portion and the separation tube portion.

In another aspect, the suction tube portion and the separation tube portion are integrally coupled to each other at a crossing angle of 45° or smaller so as to form a bifurcated shape in a side view or a vertical cross section.

In another aspect, the separation tube portion is disposed nearer to an operator than the suction tube portion is.

In another aspect, a partition plate portion is provided along a substantially longitudinal direction on a distal end side of a single tube, the single tube including the connecting tube portion on a proximal end side, and the partition plate portion is adapted to partition the single tube on a distal end side of the connecting tube portion into at least the suction tube portion and the separation tube portion.

In another aspect, an end portion of the partition plate portion adjacent to the connecting tube portion is inclined toward the separation tube portion.

In another aspect, the suction and separation composite tube further includes a cap member adapted to close an opening of the separation tube portion opposite to the combining portion between the separation tube portion and the suction tube portion so as to be open or closed.

In another aspect, the separation tube portion is adapted to block off the outside air so as to create a vortex at the combining portion.

### Advantageous Effects of Invention

In the suction and separation composite tube according to the present invention, the suction tube portion is combined with the separation tube portion. Since the passage cross-sectional area of the combining portion between the separation tube portion and the suction tube portion is set larger than the effective passage cross-sectional area of the suction tube portion or the separation tube portion, the passage capacity is expanded in the combining portion, and the change in the airflow involving sucked objects is generated. In particular, the flow velocity of the airflow involving sucked objects decreases at the combining portion. As a result, the sucked objects of large specific gravity lifted up to the combining portion will lose momentum, thus dropping to the distal end side of the separation tube portion from the combining portion. On the other hand, the sucked objects of small specific gravity are less influenced by the decrease in the flow velocity, and are directed toward the intake opening from the combining portion through the connecting tube portion by a suction force.

As described above, in the suction and separation composite tube of the present invention, the airflow involving the sucked objects that have been sucked from the suction port changes at the combining portion between the separation tube portion and the suction tube portion. In particular, using the fact that the flow velocity of the airflow decreases at the combining portion, the suction and separation composite tube of the present invention can accurately separate the sucked objects into items of small specific gravity and items of large specific gravity. In more detail, the sucked objects of relatively small specific gravity direct toward the intake opening from the combining portion through the connecting tube portion, and the sucked objects of relatively large specific gravity drop to the distal end side of the separation tube portion from the combining portion.

Furthermore, the technique in a type of separation using the centrifugal separation effect (Patent Literature 3), for example, requires spinning the air involving sucked objects around the central shaft of the centrifugal separation portion, and thus tends to cause clogging of the sucked objects inside. However, the suction and separation composite tube of the present invention can reduce the likelihood of clogging or the like of sucked objects by simply allowing the air involving sucked objects to slightly turn.

As described above, the suction and separation composite tube of the present invention is highly cost effective and is capable of, with a relatively simple structure to keep the manufacturing costs low, separating sucked objects, before taken into the air blower, into items of relatively small specific gravity such as fallen leaves and items of relatively large specific gravity such as stones even if the output of the motor is set high, and thus reducing the likelihood of clogging or the like of the sucked objects and effectively preventing damage to or breakage of the fan and the fan casing of the air blower.

In addition, the suction cleaning machine or the harvesting machine using the suction and separation composite tube of the present invention may contribute to reduced manufacturing costs, improved workability with improved separation performance, and enhanced maintenance performance and the like.

### Brief Description of Drawings

Fig. 1 is a schematic perspective view of a first embodiment of a suction and separation composite tube according to the present invention.
Fig. 2 is a schematic cross-sectional view of the suction and separation composite tube of the first embodiment during use.
Fig. 3 is a schematic cross-sectional view of a prototype of the suction and separation composite tube according to the present invention, where change in the airflow inside of the suction and separation composite tube is visualized by a computer simulation.
Fig. 4 is a schematic cross-sectional view of a suction and separation composite tube of a second embodiment during use.
Fig. 5 is a schematic cross-sectional view of a suction and separation composite tube of a third embodiment during use.
Fig. 6 is a schematic cross-sectional view of a suction and separation composite tube of a fourth embodiment during use.
Fig. 7 is a schematic cross-sectional view of a suction and separation composite tube of a fifth embodiment during use.
Fig. 8A is a schematic perspective view of a suction and separation composite tube of a sixth embodiment.
Fig. 8B is a schematic cross-sectional view of the suction and separation composite tube of the sixth embodiment.
Fig. 8C is a half sectional perspective view of the suction and separation composite tube of the sixth embodiment.
Fig. 9 is a perspective view of a conventional portable air blower (suction cleaning machine) having a suction pipe attached thereto.

### Description of Embodiments

Hereinafter, one example of the embodiment of the present invention will be described with reference to the drawings.

### [First embodiment]

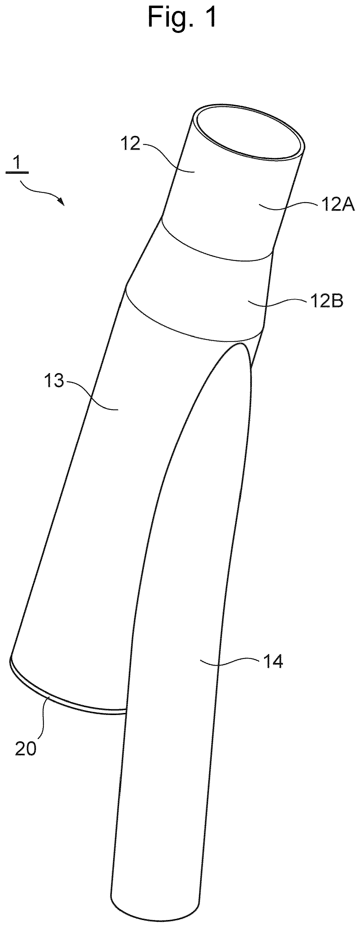

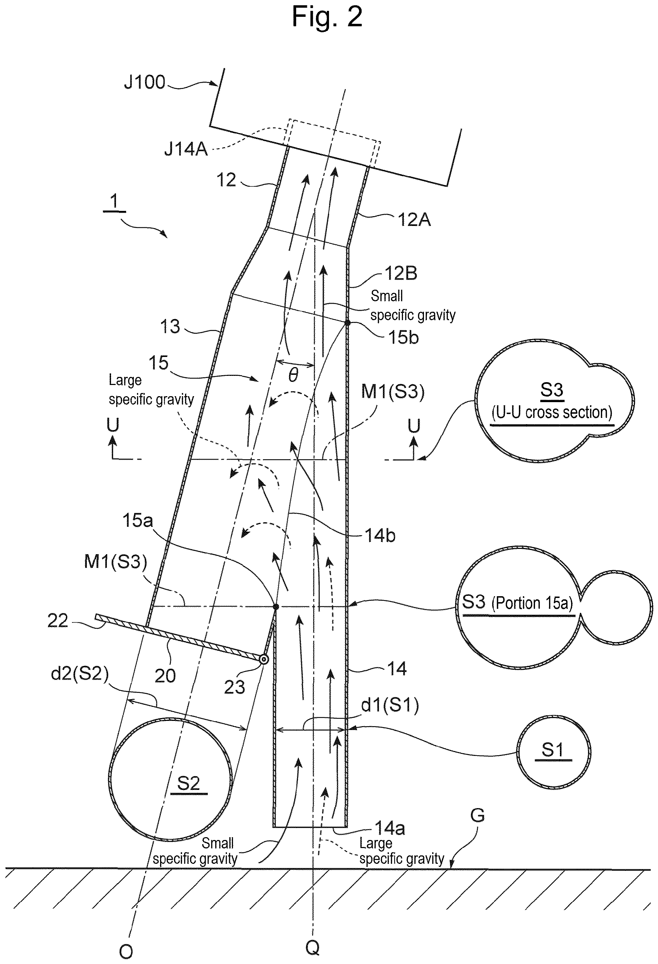

Fig. 1 is a schematic perspective view of a first embodiment of a suction and separation composite tube according to the present invention. Fig. 2 is a schematic cross-sectional view of the suction and separation composite tube shown in Fig. 1 during use. It should be noted that although the basic configuration other than the suction and separation composite tube as a suction pipe is substantially equal to that of the forgoing conventional example shown in Fig. 9, for example, it is needless to mention that for the motor J11, a motor may be applied instead of an engine. In addition, one side of the suction and separation composite tube adjacent to the main body of the portable air blower J100 will be referred to as a proximal end side (or an upper end side), while the other side of the suction and separation composite tube opposite to the main body of the portable air blower J100 will be referred to as a distal end side (or a lower end side).

A suction and separation composite tube (hereinafter this may be referred to simply as a composite tube) 1 of the illustrated embodiment is used as a suction pipe in the above-stated power-driven portable air blower (suction cleaning machine) J100 for dust collecting and cleaning work on roads or the like illustrated in Fig. 9, and is basically made up of three parts, that is, a connecting tube portion 12, a separation tube portion 13, and a suction tube portion 14.

These connecting tube portion 12, separation tube portion 13, and suction tube portion 14 are integrally formed by molding a material such as a synthetic resin, for example. However, one or two parts among the three parts may be separately molded first, and then these parts may be assembled into a unitary component. In addition, at least one of the three parts may be made of a different material. The material and the forming method do not particularly matter.

It should be noted that the one or two parts separately formed may be detachable from the other part. In this case, for example, the separation tube portion 13 and/or the suction tube portion 14 may detachable from the connecting tube portion 12, and the separation tube portion 13 and/or the suction tube portion 14 having different configurations according to the applications and use environments may be mounted to the connecting tube portion 12.

The connecting tube portion 12 of the illustrated embodiment includes, from the proximal end (upper end) side, a small-diameter cylindrical portion 12A having a straight tube shape and a constant circular cross section and a truncated portion 12B that expands its diameter from the proximal end side (i.e., the small-diameter cylindrical portion 12A side) toward the distal end side. The proximal end portion (upper end portion) of the connecting tube portion 12 (or the small-diameter cylindrical portion 12A thereof) is configured to be detachably mounted to the intake opening J14A of the portable air blower J100. It should be noted that without the truncated portion 12B, the connecting tube portion 12 may be provided to be integrally continuous with the separation tube portion 13 and the suction tube portion 14, while keeping its straight tube shape and a constant circular cross section from the proximal end (upper end) side to the distal end side.

The separation tube portion 13 has a straight tube shape and the diameter of the tube is equal to that of the distal end (the lower end of the truncated portion 12B) of the connecting tube portion 12, shares a center line O with the connecting tube portion 12, and is provided to be integrally continuous with the connecting tube portion 12 without a step at the distal end (the lower end of the truncated portion 12B) of the connecting tube portion 12. Thus, the connecting tube portion 12 and the separation tube portion 13 may be regarded as one straight tube.

In addition, in one example, an open distal end of the separation tube portion 13 is closed by a hinged cap member 20 so as to be open or closed (so as to be selectively communicated with outside air). Although this example employs the hinged cap member 20, the opening and closing method and the configuration of the cap member 20 do not matter as long as it can open and close the open distal end of the separation tube portion 13. In addition, as long as sucked objects inside of the separation tube portion 13 can be removed and discharged to the outside, the cap member 20 need not be provided at the open distal end of the separation tube portion 13, and the sucked objects may be discharged to the outside by configuring the separation tube portion 13 itself to be detachable, for example. Thus, the method of removing the sucked objects inside of the separation tube portion 13 does not particularly matter. Furthermore, in Fig. 2, the cap member 20 is provided with a foot pedal 22 as an example of an operation member for operating the cap member 20 in an open position as necessary and also a coil spring 23 as a biasing member that biases the cap member 20 in a normally closed position.

The suction tube portion 14 has a straight tube shape with a diameter smaller than that of the separation tube portion 13, and includes at its open distal end a suction port 14a that is communicated with the outside air to suck objects therefrom. Thus, in the present embodiment, the separation tube portion 13 blocks off the outside air as compared with the suction tube portion 14. This suction tube portion 14 has a center line Q (crossing angle θ) that intersects, on the same plane, the common center line O of the connecting tube portion 12 and the separation tube portion 13. On the proximal end side of the suction tube portion 14, a side face portion of the suction tube portion 14 corresponding to the intermediate portion to proximal end (upper end) of the separation tube portion 13 is open in an elliptical shape. The suction tube portion 14 is combined with the separation tube portion 13 via this elliptical side face opening 14b. Here, the lower end of the side face opening 14b is a combining start portion 15a, the upper end of the side face opening 14b is a combining end portion 15b, and a portion between the combining start portion 15a and the combining end portion 15b is a combining portion 15 between the suction tube portion 14 and the separation tube portion 13. In addition, the distal end of the suction tube portion 14 projects farther (downward) than the distal end of the separation tube portion 13.

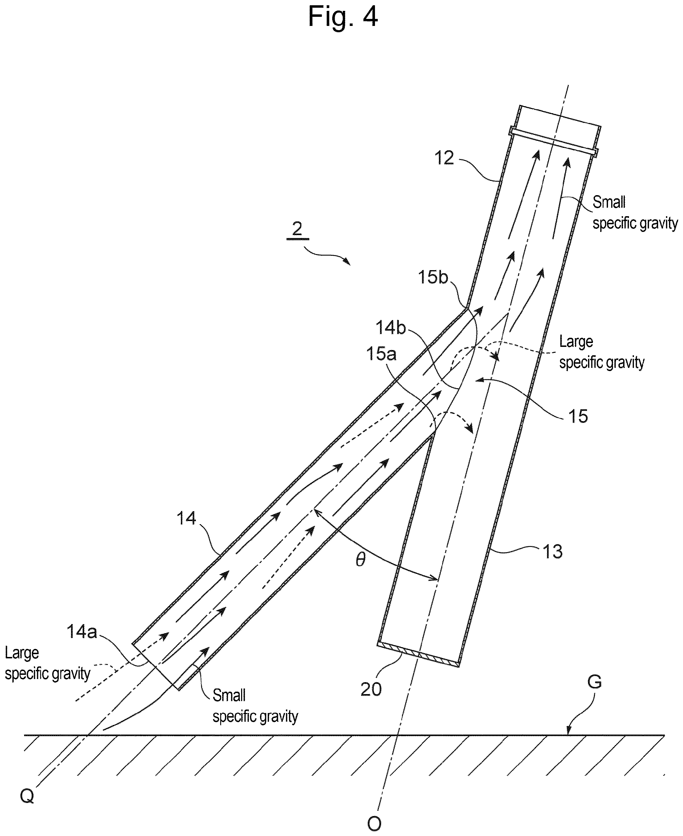

During dust collecting and cleaning work, the composite tube 1 of the present embodiment is used in a standing position of the suction tube portion 14 with respect to the ground G as shown in Fig. 2 or in an inclined position of the suction tube portion 14 with respect to the ground G as shown in Fig. 4. Thus, the connecting tube portion 12 is arranged above (adjacent to the portable air blower) the combining start portion 15a between the suction tube portion 14 and the separation tube portion 13. The composite tube 1 of the present embodiment can obtain a separation effect without any particular influence of the work position. In Fig. 2, the composite tube 1 is used in the standing position of the suction tube portion 14 with respect to the ground G, where the separation tube portion 13 is placed (located) above the suction tube portion 14, and the air involving the sucked objects that have been sucked from the suction port 14a of the suction tube portion 14 is introduced into the combining portion 15 from the lower side of the side face opening 14b. As shown in Fig. 4, when the composite tube 1 of the present embodiment is used in the inclined position of the suction tube portion 14 with respect to the ground G, locating the separation tube portion 13 below the suction tube portion 14 further allows separation using the gravity.

Here, in the composite tube 1 of the present embodiment, the airflow involving the sucked objects that have been sucked from the suction port 14a changes at the combining portion 15 between the suction tube portion 14 and the separation tube portion 13. In particular, using the fact that the flow velocity of the airflow involving the sucked objects decreases at the combining portion 15 between the suction tube portion 14 and the separation tube portion 13, the composite tube 1 of the present embodiment is configured to separate the sucked objects into items that are relatively light and soft with a large surface area (small specific gravity) such as fallen leaves and items that are relatively heavy and hard (large specific gravity) such as stones (using a specific gravity difference), direct (suck) the items of relatively small specific gravity substantially linearly toward the intake opening J14A from the combining portion 15 through the connecting tube portion 12 by a suction force, and allow the items of relatively large specific gravity to drop to the distal end side of the separation tube portion 13 from the combining portion 15 so as to temporarily accumulate on the cap member 20 within the separation tube portion 13.

In this case, the value of the specific gravity serving as a boundary that separates the items to be sucked into the intake opening J14A through the connecting tube portion 12 from the items to be dropped to the distal end side of the separation tube portion 13 is determined depending on the change in the airflow involving the sucked objects at the combining portion 15 (in particular, a decrease level of the flow velocity).

The change in the airflow involving the sucked objects at the combining portion 15 (in particular, a decrease level of the flow velocity) relates to a crossing angle θ (described later) between the center line Q of the suction tube portion 14 and the center line O of the separation tube portion 13, a diameter d1 (effective passage cross-sectional area S1) of the suction tube portion 14, a diameter d2 (effective passage cross-sectional area S2) of the separation tube portion 13, and a passage cross-sectional area S3 on a plane M1 which runs through a predetermined position of the combining portion 15 from the combining start portion 15a to the combining end portion 15b between the suction tube portion 14 and the separation tube portion 13 and is perpendicular to the suction tube portion 14.

In addition, by setting a small diameter d1 (effective passage cross-sectional area S1) of the suction tube portion 14 to some extent, the sucked objects having a relatively large length such as twigs, for example, can easily be directed when sucked into the suction tube portion 14, thereby reducing the likelihood of clogging. Meanwhile, by setting a large diameter d2 (effective passage cross-sectional area S2) of the separation tube portion 13, the likelihood of clogging is reduced, thus allowing more sucked objects to accumulate.

By taking into account the above considerations and findings, the types of sucked objects to be sucked in and collected through the composite tube 1 of the present embodiment, and the like, the suction tube portion 14 and the separation tube portion 13 are integrally coupled to each other at a predetermined crossing angle θ so as to form a bifurcated shape in a side view and a vertical cross section.

In this case, as the crossing angle θ between the center line Q of the suction tube portion 14 and the center line O of the separation tube portion 13 increases to exceed 45°, the sucked objects tend to collide with the wall surface of the separation tube portion 13 (wall surface of the combining portion 15 opposite to the side face opening 14b), and the sucked objects are less likely to be directed linearly toward the intake opening J14A from the combining portion 15 and are likely to be clogged by being caught inside, for example. In addition, there is a possibility that the suction performance will decrease because mud or the like contained in the sucked objects adheres (is fixed) to the wall surface of the separation tube portion 13, for example. For this reason, the crossing angle θ is preferably 45° or smaller. The crossing angle θ may be set in a range from 10° to 20°. When the crossing angle θ is set within this range, the airflow involving the sucked objects can smoothly be introduced from the suction tube portion 14 to the combining portion 15. In the present embodiment, the crossing angle θ is set to 15°.

In addition, the diameter d2 (effective passage cross-sectional area S2) of the separation tube portion 13 in a bifurcated portion is preferably considerably larger than the diameter d1 (effective passage cross-sectional area S1) of the suction tube portion 14.

Furthermore, the passage cross-sectional area S3 on the plane M1 which runs through a predetermined position of the combining portion 15 from the combining start portion 15a to the combining end portion 15b between the suction tube portion 14 and the separation tube portion 13 and is perpendicular to the suction tube portion 14 is preferably larger than the effective passage cross-sectional area S1 of the suction tube portion 14 or the effective passage cross-sectional area S2 of the separation tube portion 13. A change in the passage cross-sectional area of the composite tube 1 can vary the airflow. Here, the passage cross-sectional area S3 on the plane M1 which runs through a predetermined position of the combining portion 15 from the combining start portion 15a to the combining end portion 15b and is perpendicular to the suction tube portion 14 is set larger than the effective passage cross-sectional area S1 of the suction tube portion 14 or the effective passage cross-sectional area S2 of the separation tube portion 13. This decreases the flow velocity of the airflow involving the sucked obj ects.

During dust collecting and cleaning work using the composite tube 1 with such a configuration, sucked objects including not only the items that are relatively light and soft with a large surface area (small specific gravity) such as fallen leaves and cut grass, but also the items that are relatively heavy and hard (large specific gravity) such as stones and tree branches are sucked from the suction port 14a of the suction tube portion 14 together with the air by a suction force (suction pressure) generated by the fan of the portable air blower J100, lifted up through the inside of the suction tube portion 14, and then introduced into the combining portion 15.

In this case, in the suction and separation composite tube 1 in which the suction tube portion 14 is combined with the separation tube portion 13, since the passage cross-sectional area (S3) of the combining portion 15 is larger than the effective passage cross-sectional area (S1) of the suction tube portion 14 or the effective passage cross-sectional area (S2) of the separation tube portion 13, the passage capacity is expanded in the combining portion 15, and the change in the airflow involving the sucked objects is generated. Here, in particular, the flow velocity of the airflow decreases (in the circled portion in Fig. 3, a light portion representing low speed increases). In addition, by combining the suction tube portion 14 with the separation tube portion 13, the change in the airflow involving the sucked objects is generated. Here, a vortex is created in the combining start portion 15a of the combining portion 15 to decrease the flow velocity of the airflow involving the sucked objects in a suction direction. In addition, the vortex is grown in the portion between the combining start portion 15a and the combining end portion 15b without making the vortex disappear so as to decrease the flow velocity of the airflow involving the sucked objects in the suction direction (in the circled portion in Fig. 3, a dark potion representing high speed partially disappears). As a result, the sucked objects of large specific gravity lifted up to the combining portion 15 will lose momentum, thus dropping to the distal end side of the separation tube portion 13 from the combining portion 15. On the other hand, the sucked objects of small specific gravity are less influenced by the decrease in the flow velocity, and are directed substantially linearly toward the intake opening J14A from the combining portion 15 through the connecting tube portion 12 by a suction force. After that, the sucked objects of small specific gravity are processed in the same manner as the conventional portable air blower (suction cleaning machine) J100 and collected in the dust bag.

As described above, in the suction and separation composite tube 1 of the present embodiment, the airflow involving the sucked objects that have been sucked from the suction port 14a changes at the combining portion 15 between the separation tube portion 13 and the suction tube portion 14. In particular, using the fact that the flow velocity of the airflow decreases at the combining portion 15, the suction and separation composite tube 1 of the present embodiment can separate the sucked objects into items that are relatively light and soft with a large surface area (small specific gravity) such as fallen leaves and items that are relatively heavy and hard (large specific gravity) such as stones, direct the items of relatively small specific gravity linearly toward the intake opening J14A from the combining portion 15 through the connecting tube portion 12 and collect them in the dust bag, and allow the items of relatively large specific gravity to drop to the distal end side of the separation tube portion 13 from the combining portion 15 to accumulate on the cap member 20 within the separation tube portion 13 for removal at an appropriate timing.

In addition, the suction and separation composite tube 1 of the present embodiment has a simple configuration made up of the straight (linear) connecting tube portion 12, separation tube portion 13, and suction tube portion 14 with the center line on the same plane, and is integrally formed by molding a material such as a synthetic resin, for example. This can keep the manufacturing costs low.

Furthermore, the technique in a type of separation using the centrifugal separation effect (Patent Literature 3), for example, requires spinning the air involving sucked objects around the central shaft of the centrifugal separation portion, and thus tends to cause clogging of the sucked objects inside. However, the suction and separation composite tube 1 of the present embodiment can reduce the likelihood of clogging or the like of sucked objects by simply allowing the air involving sucked objects to gradually turn.

As described above, the suction and separation composite tube 1 of the present embodiment is highly cost effective and is capable of, with a relatively simple structure to keep the manufacturing costs low, separating sucked objects, before taken into the air blower, into items of relatively small specific gravity such as fallen leaves and items of relatively large specific gravity such as stones even if the output of the motor is set high, and thus reducing the likelihood of clogging or the like of the sucked objects and effectively preventing damage to or breakage of the fan and the fan casing of the air blower.

### [Second embodiment]

Fig. 4 is a schematic cross-sectional view of a suction and separation composite tube 2 of a second embodiment.

In the illustrated suction and separation composite tube 2 of the second embodiment, parts corresponding to the parts of the foregoing suction and separation composite tube 1 of the first embodiment are denoted by the same reference numerals, and repeated description thereof will be omitted. In the following, differences will mainly be described (the same applies in each embodiment that follows).

The composite tube 2 of the present embodiment also basically includes a connecting tube portion 12 disposed adjacent to the portable air blower J100 and detachably mounted to the intake opening J14A of the portable air blower J100 at a proximal end portion (upper end portion) of the connecting tube portion 12, a suction tube portion 14 including at its open distal end a suction port 14a that is communicated with the outside air to suck objects therefrom, and a separation tube portion 13 including an open distal end (an opening opposite to the combining portion 15 between the separation tube portion 13 and the suction tube portion 14) closed by a cap member 20 so as to be open or closed (so as to be selectively communicated with outside air), the separation tube portion 13 blocking off the outside air as compared with the suction tube portion 14. In addition, the suction tube portion 14 and the separation tube portion 13 are combined together (in a bifurcated manner) from their intermediate portion to proximal end, and the crossing angle θ between the suction tube portion 14 and the separation tube portion 13 is set to 30°.

During dust collecting and cleaning work, the composite tube 2 of the present embodiment is used in an entirely inclined position with respect to the ground G as shown in Fig. 4, where the connecting tube portion 12 is arranged above (adjacent to the portable air blower) the combining start portion 15a between the suction tube portion 14 and the separation tube portion 13, and the separation tube portion 13 is located below the suction tube portion 14. It is needless to mention that the composite tube 2 of the present embodiment may be used in a standing position of the suction tube portion 14 with respect to the ground G like the composite tube 1 of the first embodiment shown in Fig. 2. In the case of Fig. 4, the separation tube portion 13 is disposed nearer to the operator holding the portable air blower J100 than the suction tube portion 14 is.

Thus, when performing the work in the entirely inclined position with respect to the ground G with the separation tube portion 13 located below the suction tube portion 14, the composite tube 2 of the present embodiment allows the items with relatively large specific gravity to easily drop to the distal end side of the separation tube portion 13 and can further increase the separation effect using not only the separation effect of the composite tube 2 but also the gravity. For this reason, a strong suction force and a high sealability that are required for the composite tube 2, when performing the work in the entirely inclined position with respect to the ground G with the separation tube portion 13 located above the suction tube portion 14, unlike Fig. 4, will not be necessary.

Other operational effects are substantially equal to those of the first embodiment.

### [Third embodiment]

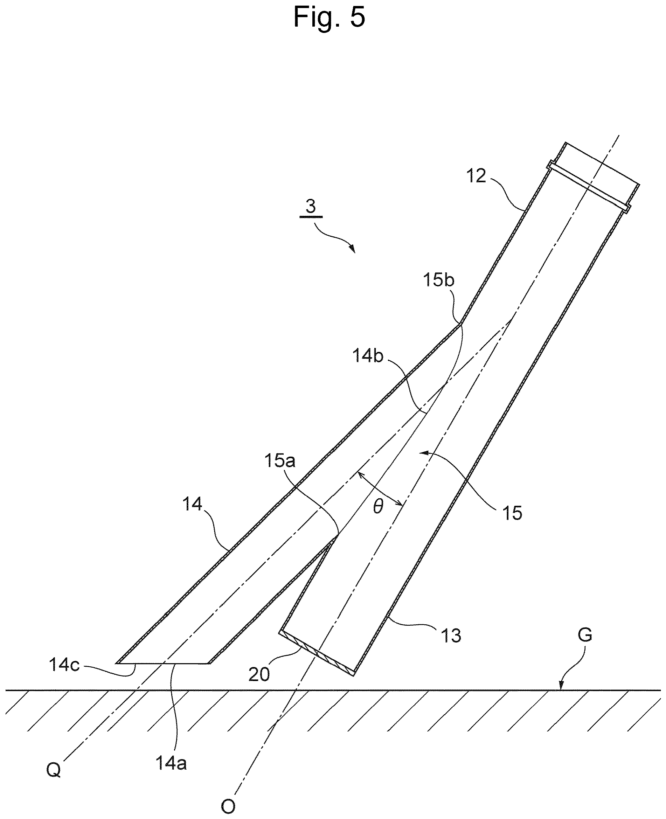

Fig. 5 is a schematic cross-sectional view of a suction and separation composite tube 3 of a third embodiment.

The composite tube 3 of the present embodiment has the same basic configuration as the composite tube 2 of the second embodiment. The composite tube 3 is different from the composite tube 2 in that a distal end face 14c of the suction tube portion 14 is inclined with respect to the center line Q of the suction tube portion 14 by a predetermined angle (about 45° in the illustrated example).

In the composite tube 3 of the present embodiment, since the distal end face 14c of the suction tube portion 14 is inclined as described above, the suction port 14a is elliptical in shape and has an increased opening area, and the distal end face 14c can be in parallel with the ground G while performing the cleaning work. This makes the work efficiency higher than that of the composite tubes of the first and second embodiments without inclination, for example, and further allows obtaining an advantage that the likelihood of interference with the ground G can be reduced.

### [Fourth embodiment]

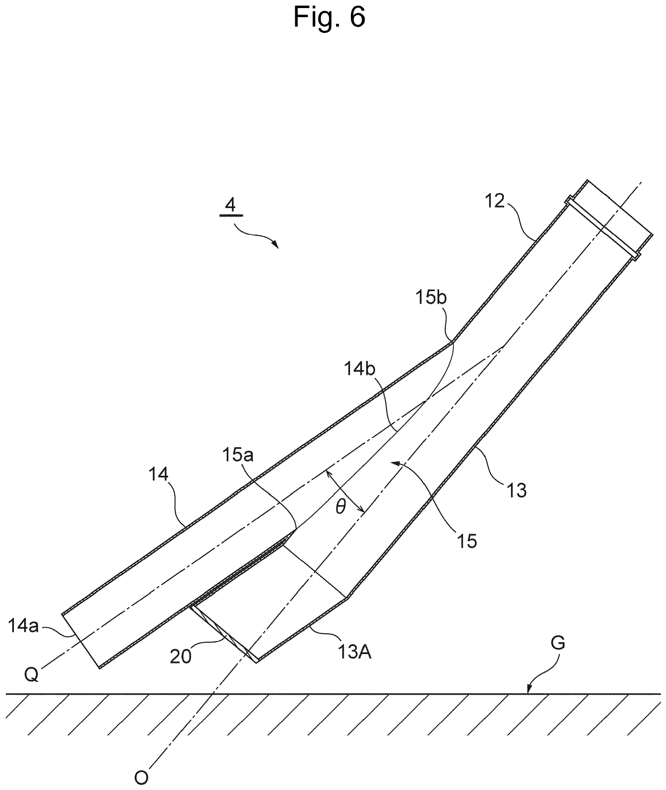

Fig. 6 is a schematic cross-sectional view of a suction and separation composite tube 4 of a fourth embodiment.

The composite tube 4 of the present embodiment has the same basic configuration as the composite tube 2 of the second embodiment. The separation tube portion 13 of the present embodiment includes, at its distal end side with respect to the combining portion 15 between the separation tube portion 13 and the suction tube portion 14, a distal end portion 13A that is bent or curved along the suction tube portion 14. In other words, although the composite tube 2 of the second embodiment includes the separation tube portion 13 and the suction tube portion 14 that are slightly open in a bifurcated manner, such a bifurcated portion is closed in the composite tube 4 of the present embodiment, that is, the distal end portion 13A of the separation tube portion 13 and the suction tube portion 14 are located in parallel with each other.

In the composite tube 4 of the present embodiment, since the distal end portion 13A of the separation tube portion 13 is bent or curved along the suction tube portion 14 as described above, a space occupied by the suction and separation composite tube can be reduced, the interference with the ground G can be reduced, and the workability can be improved.

### [Fifth embodiment]

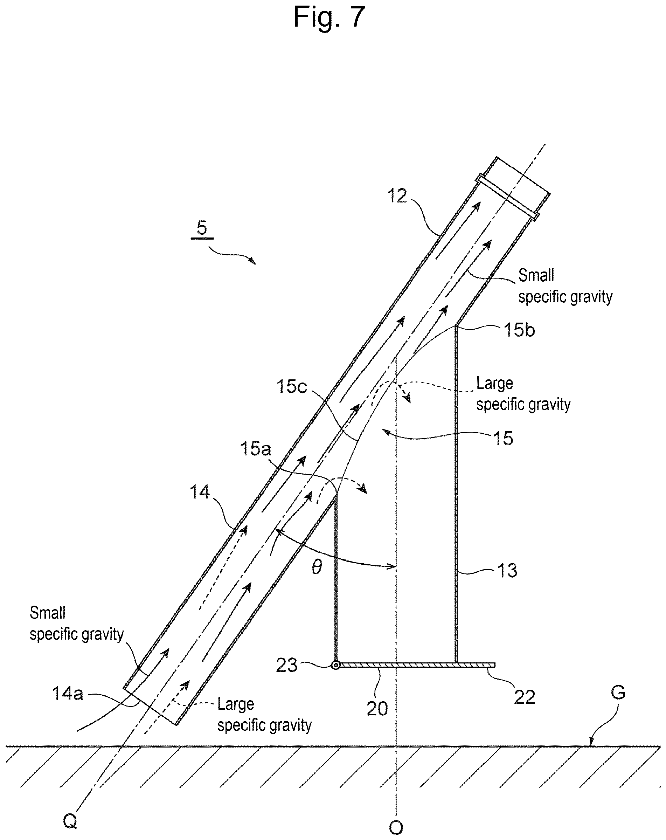

Fig. 7 is a schematic cross-sectional view of a suction and separation composite tube 5 of a fifth embodiment.

The composite tube 5 of the present embodiment is different from the composite tubes of the first to fourth embodiments in that the suction tube portion 14 shares the center line Q with the connecting tube portion 12 and has a diameter equal to that of the connecting tube portion 12 (or the distal end thereof), and is provided to be integrally continuous with the distal end (lower end) of the connecting tube portion 12. Thus, the connecting tube portion 12 and the suction tube portion 14 may be regarded as one straight tube.

The separation tube portion 13 has an elliptical cross section that is elongated (minor axis thereof ≤ the diameter of the suction tube portion 14) in a direction to adjoin the suction tube portion 14, and has a center line O (crossing angle θ) that intersects, on the same plane, the common center line Q of the connecting tube portion 12 and the suction tube portion 14. On the proximal end side of the separation tube portion 13, a side face portion of the separation tube portion 13 corresponding to the intermediate portion to proximal end (upper end) of the suction tube portion 14 is open in an elliptical shape. The separation tube portion 13 is combined with the suction tube portion 12 via this elliptical side face opening 15c. Also in the present embodiment, the separation tube portion 13 blocks off the outside air (as compared with the suction tube portion 14) such that a vortex is created in the combining portion 15 between the suction tube portion 14 and the separation tube portion 13 to decrease the momentum of the airflow involving the sucked objects in a suction direction. Also in the present embodiment, the distal end of the suction tube portion 14 preferably projects farther (downward) than the distal end of the separation tube portion 13.

During dust collecting and cleaning work, the composite tube 5 of the present embodiment is used in an entirely inclined position with respect to the ground G as shown in Fig. 7, where the connecting tube portion 12 is arranged above (adjacent to the portable air blower) the combining start portion 15a between the suction tube portion 14 and the separation tube portion 13, and the separation tube portion 13 is located below the suction tube portion 14. In this case, the separation tube portion 13 is disposed nearer to the operator holding the portable air blower J100 than the suction tube portion 14 is. Thus, the items of relatively small specific gravity are directed toward the intake opening J14A through the suction tube portion 14 → the upper part of the combining portion 15 → the connecting tube portion 12, whereas the items of relatively large specific gravity are dropped to the distal end side of the separation tube portion 13 located below the combining portion 15.

As described above, the composite tube 5 of the present embodiment can surely and easily perform separation using a specific gravity difference in the same manner as those described above.

Other operational effects are substantially equal to those of the first to fourth embodiments.

### [Sixth embodiment]

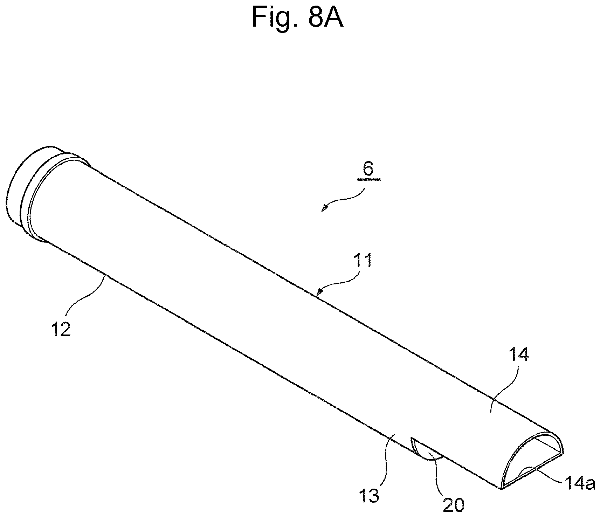

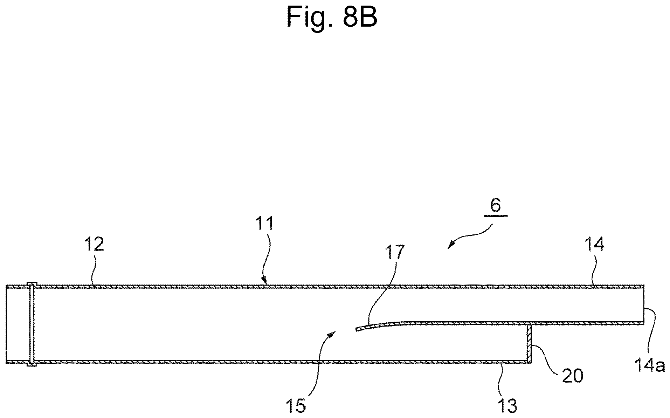

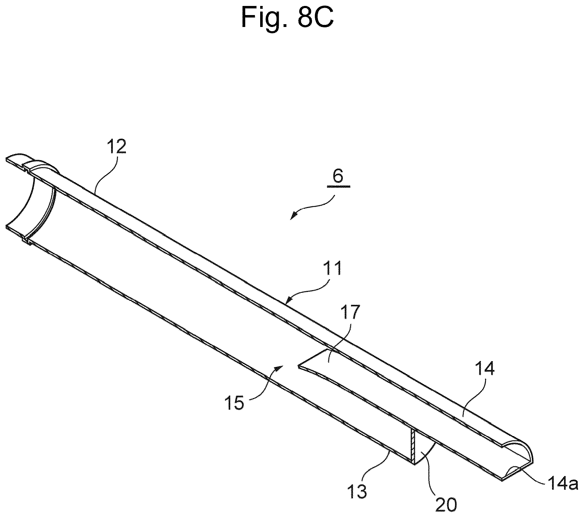

Fig. 8A to Fig. 8C show a suction and separation composite tube 6 of a sixth embodiment. Fig. 8A is a schematic perspective view, Fig. 8B is a schematic cross-sectional view, and Fig. 8C is a half sectional perspective view.

The composite tube 6 of the present embodiment is different from the composite tubes of the first to fifth embodiments in that it is basically made up of one straight tube. That is, on the distal end side of a single tube (in this example, a straight tube having an approximately circular cross section) 11 including a connecting tube portion 12 on its proximal end side, a short partition plate portion 17 is provided along a substantially longitudinal direction. The partition plate portion 17 is adapted to partition the single tube 11 on the distal end side of the connecting tube portion 12 into at least the suction tube portion 14 and the separation tube portion 13. In addition, the partition plate portion 17 is inclined smoothly toward the separation tube portion 13 at its end portion adjacent to the connecting tube portion 12, such that the suction tube portion 14 and the separation tube portion 13 are smoothly combined together. The distal end of the suction tube portion 14 projects farther than the distal end of the separation tube portion 13.

With the partitioning by the partition plate portion 17, the suction tube portion 14 and the separation tube portion 13 are located in parallel with each other, and the cross sections of the suction tube portion 14 and the separation tube portion 13 are substantially semi-circular. The cross-sectional area (effective passage cross-sectional area) of the suction tube portion 14 is smaller than that of the separation tube portion 13.

Also the suction and separation composite tube 6 of the present embodiment with such a very simple configuration can perform separation using a specific gravity difference in the same manner as those described above, and can obtain the same effect as those described above. In addition, since the partition plate portion 17 (or its end portion adjacent to the connecting tube portion 12) is smoothly inclined toward the separation tube portion 13, the sucked objects of large specific gravity tend to move toward the separation tube portion 13. In addition, since the suction and separation composite tube 6 of the present embodiment is basically made up of one straight tube, a space occupied by the suction and separation composite tube can significantly be reduced.

It should be noted that the crossing angle θ between the suction tube portion 14 and the separation tube portion 13, the ratio between the effective passage cross-sectional area S 1 of the suction tube portion 14 and the effective passage cross-sectional area S2 of the separation tube portion 13, and the ratio among the effective passage cross-sectional area S1 of the suction tube portion 14, the effective passage cross-sectional area S2 of the separation tube portion 13, and the passage cross-sectional area S3 on the plane M1, and the like are not limited to those of the foregoing embodiments. They may be set according to the types or properties of sucked objects, work positions, use modes, and the like.

In addition, the cross sectional shapes of the connecting tube portion 12, the separation tube portion 13, and the suction tube portion 14 are not limited to a circle, and may be an ellipse or a polygon (square, hexagon, or the like). As compared to the circle (perfect circle), for example, the ellipse is advantageous because a space can be saved, and the separation performance can be adjusted in a wider range, for example. In addition, the shape of the distal end (lower end) of the suction tube portion 14 may be tapered or expanded. In other words, the distal end (lower end) may be gradually narrower or wider. In addition, the shape of the distal end (lower end) of the separation tube portion 13 may be tapered or expanded so as to increase the collection capability (to ensure the collection capacity).

In the foregoing embodiments, the cap member 20 adapted to close the open distal end of the separation tube portion 13 so as to be open or closed is provided. However, without providing the cap member 20, for example, the open distal end of the separation tube portion 13 may be (normally) closed, and the sucked objects that have accumulated on the distal end side of the separation tube portion 13 may be removed after the suction and separation composite tube (1 to 6) or the separation tube portion 13 or the suction tube portion 14 is detached from the intake opening.

In the foregoing embodiments, the examples of using the suction and separation composite tube of the present invention for the portable air blower (suction cleaning machine) for dust collecting and cleaning work on roads or the like using a suction pressure or air-blowing pressure of the power-driven air blower have been described. However, the present invention is not limited thereto, and may be applicable as long as it can perform separation using a specific gravity difference.

Specifically, examples include work of collecting empty cans and the like (separation from waste such as paper and plastic films, leaves, branches, cigarette butts, and the like), work of collecting golf balls and the like (separation from leaves, twigs, and the like), work of harvesting fruits and the like (coffee fruit, oil palm, chestnut, and the like) (separation from leaves, branches, and the like), for example.

In addition, it is needless to mention that the suction and separation composite tube of the present invention is not limited to a hand-held type as shown in Fig. 9, and may be applicable to a backpack type, a cart type, a traction type, an autonomous traveling robot type, and the like.

### Reference Signs List

- 1 to 6: Suction and separation composite tube
- 12: Connecting tube portion
- 13: Separation tube portion
- 14: Suction tube portion
- 14a: Suction port
- 14b, 15c: Side face opening
- 15: Combining portion
- 15a: Combining start portion
- 15b: Combining end portion
- 20: Cap member
- 22: Foot pedal (operation member)
- 25: Coil spring (biasing member)
- O, Q: Center line

## Claims

1. A suction and separation composite tube comprising:
a connecting tube portion disposed adjacent to a power-driven air blower;
a suction tube portion including at an open distal end a suction port that is communicated with outside air to suck objects therefrom; and
a separation tube portion that is adapted to block off the outside air as compared with the suction tube portion,
wherein:
the suction tube portion or the separation tube portion is provided to be integrally continuous with the connecting tube portion at a distal end thereof, and the suction tube portion and the separation tube portion are combined together at an intermediate portion or proximal end portion thereof, and
a flow velocity of airflow involving objects that have been sucked from the suction port decreases at a combining portion between the suction tube portion and the separation tube portion.

2. The suction and separation composite tube according to claim 1, wherein an effective passage cross-sectional area of the separation tube portion is larger than an effective passage cross-sectional area of the suction tube portion.

3. The suction and separation composite tube according to claim 1 or 2, wherein a passage cross-sectional area on a plane which runs through a predetermined position of a combining portion from a combining start portion to a combining end portion between the suction tube portion and the separation tube portion and is perpendicular to the suction tube portion is larger than an effective passage cross-sectional area of the suction tube portion or the separation tube portion.

4. The suction and separation composite tube according to any one of claims 1 to 3, wherein the connecting tube portion is disposed above a combining start portion between the suction tube portion and the separation tube portion.

5. The suction and separation composite tube according to any one of claims 1 to 4, wherein the suction tube portion and the separation tube portion are integrally coupled to each other at a crossing angle of 45° or smaller so as to form a bifurcated shape in a side view or a vertical cross section.

6. The suction and separation composite tube according to any one of claims 1 to 5, wherein the separation tube portion is disposed nearer to an operator than the suction tube portion is.

7. The suction and separation composite tube according to any one of claims 1 to 6, wherein a partition plate portion is provided along a substantially longitudinal direction on a distal end side of a single tube, the single tube including the connecting tube portion on a proximal end side, and the partition plate portion is adapted to partition the single tube on a distal end side of the connecting tube portion into at least the suction tube portion and the separation tube portion.

8. The suction and separation composite tube according to claim 7, wherein an end portion of the partition plate portion adjacent to the connecting tube portion is inclined toward the separation tube portion.

9. The suction and separation composite tube according to any one of claims 1 to 8, further comprising a cap member adapted to close an opening of the separation tube portion opposite to the combining portion between the separation tube portion and the suction tube portion so as to be open or closed.

10. The suction and separation composite tube according to any one of claims 1 to 9, wherein the separation tube portion is adapted to block off the outside air so as to create a vortex at the combining portion.

11. A suction cleaning machine using the suction and separation composite tube according to any one of claims 1 to 10.

12. A harvesting machine using the suction and separation composite tube according to any one of claims 1 to 10.
